Europäisches Patentamt

European Patent Office

Office européen des brevets

(11) Publication number: **0 273 246**
**A2**

## (12) EUROPEAN PATENT APPLICATION

(21) Application number: 87118134.3

(51) Int. Cl.4: **G02F 1/133**

(22) Date of filing: 08.12.87

(30) Priority: 27.12.86 JP 310676/86

(43) Date of publication of application:
06.07.88 Bulletin 88/27

(84) Designated Contracting States:
CH DE FR GB IT LI NL SE

(71) Applicant: Stanley Electric Co., Ltd.
9-13, Nakameguro 2-chome
Meguro-ku Tokyo 153(JP)

(72) Inventor: Aizawa, Masanobu
10-16, Konan 5-chome Konan-ku
Yokohama-shi Kanagawa-ken(JP)
Inventor: Yamauchi, Shigekazu
29-69-3, Sagamiohno, 6-chome
Sagamihara-shi Kanagawa-ken(JP)

(74) Representative: Dipl.-Ing. H. Marsch Dipl.-Ing.
K. Sparing Dipl.-Phys.Dr. W.H. Röhl
Patentanwälte
Rethelstrasse 123
D-4000 Düsseldorf(DE)

(54) Liquid crystal cell and manufacturing method thereof.

(57) A liquid crystal cell and a manufacturing method thereof. A pair of front and rear transparent flat substrates (12, 13) are superposed one upon the other, each substrate having a plurality of transparent electrodes (12a, 12b) formed on one side (12d, 13d) of the substrate and an orientation membrane (12b, 13b) formed on the electrodes to cover the same. With a predetermined gap maintained between the front and rear substrates (12, 13), they are bonded to each other by means of substrate adhesive (14) previously printed onto a plurality of areas except for display areas (A) where the electrodes on the respective front and rear substrates (12, 13) face toward each other. A sealing adhesive (16) is applied to the front and rear substrates (12, 13) so as to extend between their respective one sides (12d, 13d) and along a periphery of the predetermined gap to define a sealed space between the front and rear substrates (12, 13). The sealed space is filled with a liquid crystal (18).

## LIQUID CRYSTAL CELL AND MANUFACTURING METHOD THEREOF

The present invention relates to a liquid crystal cell and a manufacturing method thereof.

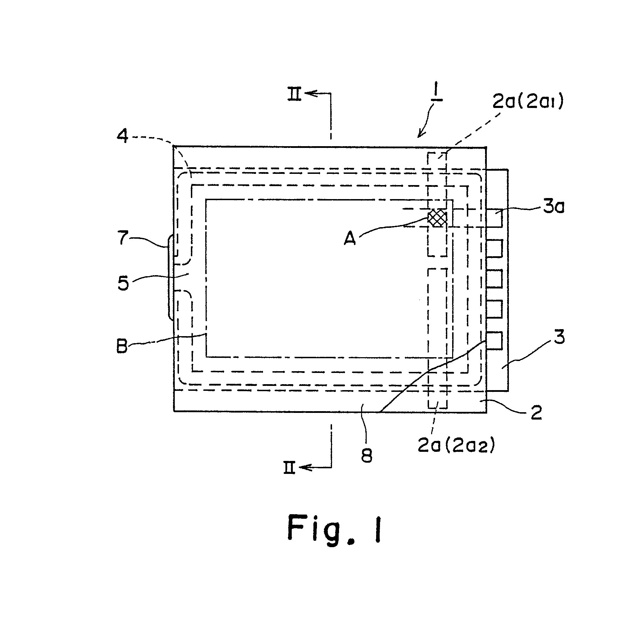

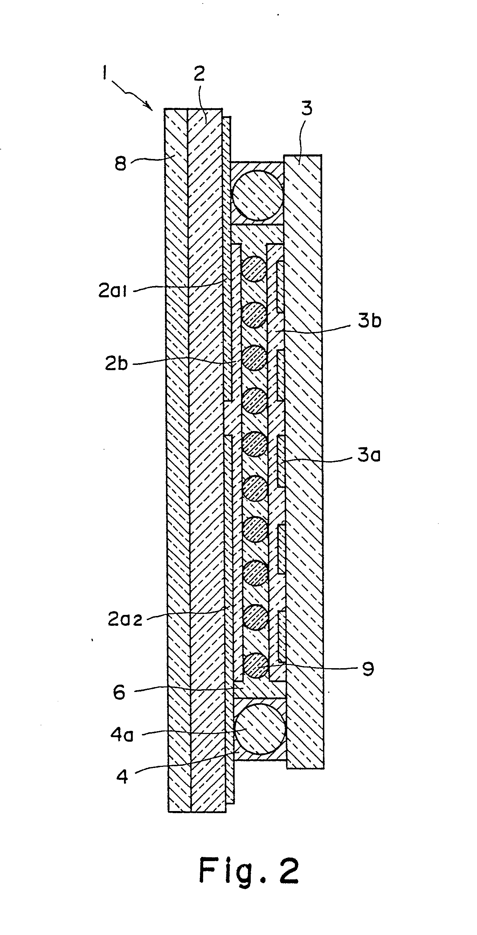

The conventional liquid crystal cell is constructed as shown in Figs. 1 and 2 of the accompanying drawings, which illustrate a typical liquid crystal cell of dot matrix type.

The liquid crystal cell of dot matrix type, generally designated by the reference numeral 1, comprises a pair of front and rear glass substrates 2 and 3. A plurality of elongated transparent electrodes 2a and 3a formed of indium tin oxide (hereinafter, referred to as "ITO") or the like are first formed respectively on one sides of the respective glass substrates 2 and 3, which face toward each other. Specifically, the electrodes 2a on the front glass substrate 2 are arranged in parallel relation and extend longitudinally in Fig. 1. Each of the transparent electrodes 2a is divided at a longitudinally intermediate position into two sections serving as signal-side transparent electrodes $2a_1$ and $2a_2$, as clearly shown in Fig. 2. On the other hand, the scanning-side transparent electrodes 3a on the rear glass electrode 3 are arranged in parallel relation and extend laterally in Fig. 1. Orientation membranes 2b and 3b formed of polyimide or the like are formed respectively on the transparent electrodes 2a and 3a. With a predetermined gap maintained between the glass substrates 2 and 3, they are superposed one upon the other in such a manner that the transparent electrodes 2a and 3a on the respective glass substrates face toward each other and are intersected at right angles with each other. The glass substrates 2 and 3 are then bonded to each other by means of substrate adhesive 4 extending along a periphery of the predetermined gap except for a portion of the periphery thereof, which portion serves as a pouring opening 5. Liquid crystal 6 is then filled into the predetermined gap between the glass substrates 2 and 3 through the pouring opening 5 by, for example, a vacuum pouring method. Finally, the pouring opening 5 is closed by a sealing adhesive 7, and a polarizing plate 8 is adhered to the other side of the front glass substrate 2, as clearly shown in Fig. 2, to thereby form the liquid crystal cell 1 of dot matrix type.

In such liquid crystal cell 1, in general, in order to maintain a constant spacing between the two glass substrates 2 and 3, i.e., a gap of the liquid crystal cell (a predetermined thickness of the liquid crystal layer 6), a plurality of spacers 4a each comprising a glass fiber cut in short length are embedded in the substrate adhesive 4, and/or similar spacers 9 having an outer diameter less than that of the spacers 4 are distributed over the gap between the orientation membranes 2b and 3b, as shown in Fig. 2.

In general, the substrate adhesive 4 is previously applied onto the periphery of the one side of one of the glass substrates 2 and 3 by a screen printing method. When the two glass substrates 2 and 3 are superposed one upon the other, the substrate adhesive 4 is heated while the glass substrates 2 and 3 are pressed against each other by, for example, a pair of metallic clamping plates, to thereby bond the glass substrates 2 and 3 to each other.

With the glass crystal cell 1 constructed as described above, as alternating voltage is applied between the transparent electrodes 2a and 3a formed respectively on the glass substrates 2 and 3, liquid crystal molecules within the liquid crystal cell 1 are actuated at points where the transparent electrodes 2a and 3a are intersected with each other, for example, at a point $\underline{A}$ in Fig. 1, so that the dot display is effected at the point $\underline{A}$. Thus, the dot display is successively effected at all of the intersected points of the transparent electrodes 2a and 3a by the time-division actuation due to the alternating voltage. On this occasion, in order to increase the number of the dots displayed by the time-division actuation as many as possible to enable more detailed display, each of the signal-side transparent electrodes 2a is divided at the longitudinally intermediate position into two sections $2a_1$ and $2a_2$.

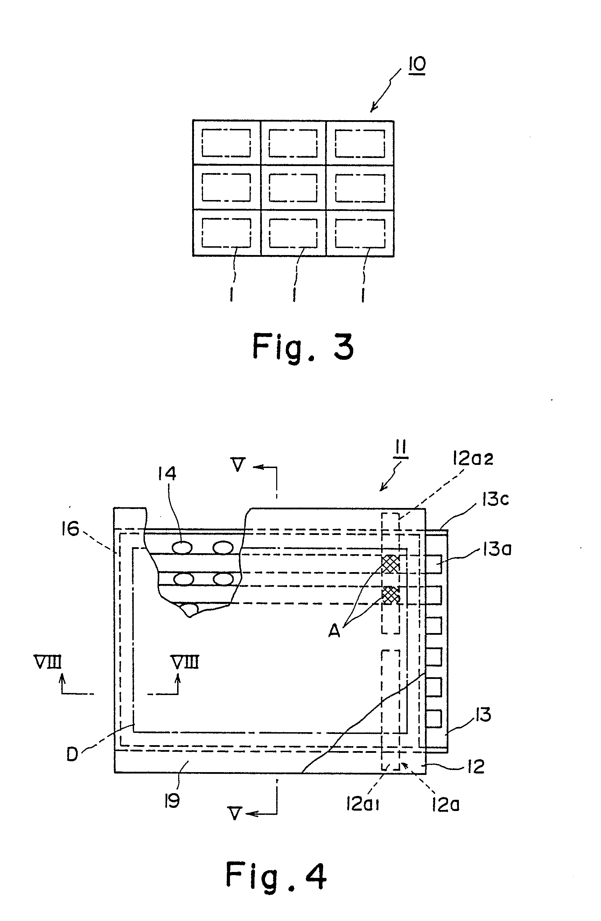

In the liquid crystal cell 1 constructed as described above, however, the width of the substrate adhesive 4 applied to the peripheries of the respective glass substrates 2 and 3 is relatively wide, resulting in a decrease in an area of an effective display region $\underline{B}$ of the liquid crystal cell 1. Thus, the manufacturing cost is increased because of the increase in the areas of the respective glass substrates 2 and 3 which are required for a predetermined effective display area. Further, if a plurality of liquid crystal cells 1 are arranged to form a large display device 10, for example, as illustrated in Fig. 3, portions of each liquid crystal cell 1, where no display is effected, are large in area so that heavy or thick lines, where no display is effected, run longitudinally and laterally on the display screen of the large display device 10. This makes difficult to watch the display, to thereby deteriorate the display quality.

It is an object of the invention to provide a liquid crystal cell in which portions of the cell, where no display is effected, produced by substrate adhesive are reduced in area as far as possible to increase an effective display area as far as possible.

It is another object of the invention to provide a method of manufacturing the liquid crystal cell.

According to the invention, there is provided a liquid crystal cell comprising:

a pair of front and rear transparent flat substrates arranged in facing and spaced relation to each other;

a plurality of transparent electrodes formed on one side of the front substrate, and a plurality of transparent electrodes formed on one side of the rear substrate which faces toward the one side of the front substrate;

orientation membranes formed respectively on the transparent electrodes on the respective front and rear substrates so as to cover the respective transparent electrodes, with a predetermined gap maintained between the one sides of the respective front and rear substrates;

substrate adhesive means arranged between the orientation membranes on the respective front and rear substrates at a plurality of areas except for display areas where the transparent electrodes on the respective substrates face toward each other, for bonding the front and rear substrates to each other, with the predetermined gap maintained therebetween;

sealing adhesive means extending between the one sides of the respective front and rear substrates and along a periphery of the predetermined gap to define a sealed space between the front and rear substrates; and

a liquid crystal filled in the sealed space.

According to the invention, there is further provided a method of manufacturing a liquid crystal cell, comprising the steps of:

preparing a pair of front and rear transparent flat substrates, each of the substrates having a plurality of transparent electrodes formed on one side of the substrate and a transparent orientation membrane formed on the transparent electrodes so as to cover the same;

printing a substrate adhesive onto a plurality of areas on the orientation membrane on at least one of the front and rear substrates;

superposing the front and rear substrates one upon the other in such a manner that the orientation membranes on the respective substrates face toward each other in spaced relation, but are brought into contact with each other through the printed substrate adhesive, the plurality of areas being those except for display areas where the electrodes on the respective front and rear substrates face toward each other;

heating the substrate adhesive to bond the front and rear substrates to each other, with a predetermined gap maintained therebetween;

applying a sealing adhesive to the front and rear substrates so as to extend between the one sides of the respective substrates and along a periphery of the predetermined gap to define a sealed space between the front and rear substrates; and

filling the sealed space with a liquid crystal.

Fig. 1 is a partially broken-away plan view of the conventional liquid crystal cell of dot matrix type;

Fig. 2 is an enlarged cross-sectional view taken along line II - II in Fig. 1;

Fig. 3 is a plan view of a large display device comprising a plurality of liquid crystal cells illustrated in Fig. 1;

Fig. 4 is a partially broken-away plan view of a liquid crystal cell according to an embodiment of the invention;

Fig. 5 is an enlarged cross-sectional view taken along line V - V in Fig. 4;

Fig. 6 is a partially broken-away, fragmental plan view showing another example of substrate adhesive illustrated in Fig. 4, which is in the form of an elongated strip;

Fig. 7 is a fragmental plan view showing a pouring opening;

Fig. 8 is an enlarged, fragmental cross-sectional view taken along line VIII - VIII in Fig. 4;

Fig. 9 is a plan view of a large display device comprising a plurality of liquid crystal cells illustrated in Fig. 4.

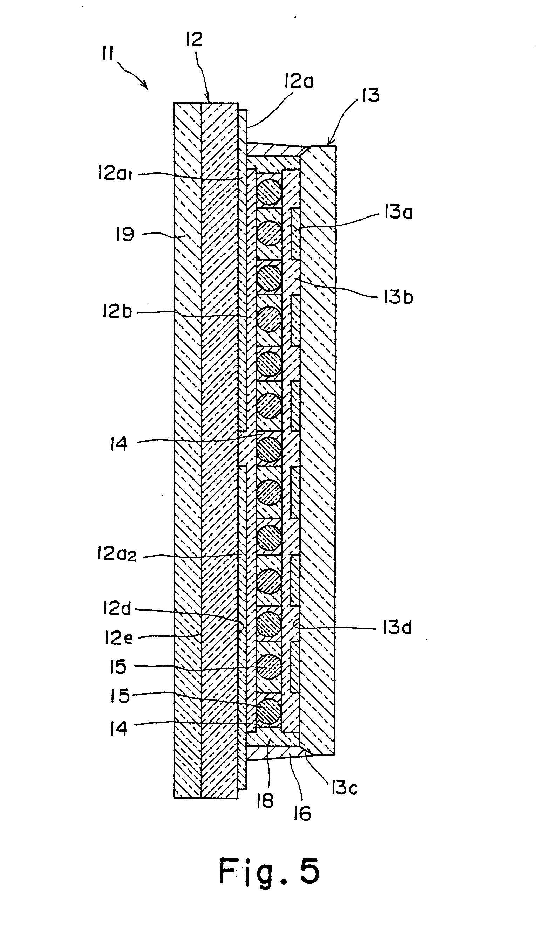

The invention will now be described in detail, by way of an example, with reference to Figs. 4 through 9 of the accompanying drawings.

Referring first to Figs. 4 and 5, there is illustrated a liquid crystal cell according to an embodiment of the invention, which is generally designated by the reference numeral 11. The liquid crystal cell 11 comprises a pair of front and rear flat glass substrates 12 and 13. A plurality of parallel transparent electrodes 12a in the form of an elongated strip and formed of ITO (indium tin oxide) or the like are formed on one side 12d of the glass substrate 12, and similar transparent electrodes 13a are formed on one side 13d of the glass substrate 13 which faces toward the one side 12d of the glass substrate 12. Orientation membranes 12b and 13b formed of polyimide or the like are formed respectively on the transparent electrodes 12a and 13a so as to respectively cover the same.

Both the glass substrates 12 and 13 are superposed one upon the other in such a manner that the orientation membranes 12b and 13b face toward each other in spaced relation, and the transparent electrodes 12a and 13a face toward each other and are perpendicularly intersected with each other. Each of the transparent electrodes 12a or each of the transparent electrodes 13a, that is to say, each of the transparent electrodes 12a in case of the illustrated embodiment is divided at a longitudinally intermediate position into two sections $12a_1$ and $12a_2$, in order to increase the number of dots A displayed by time-division actuation, as many as possible, to enable detailed display.

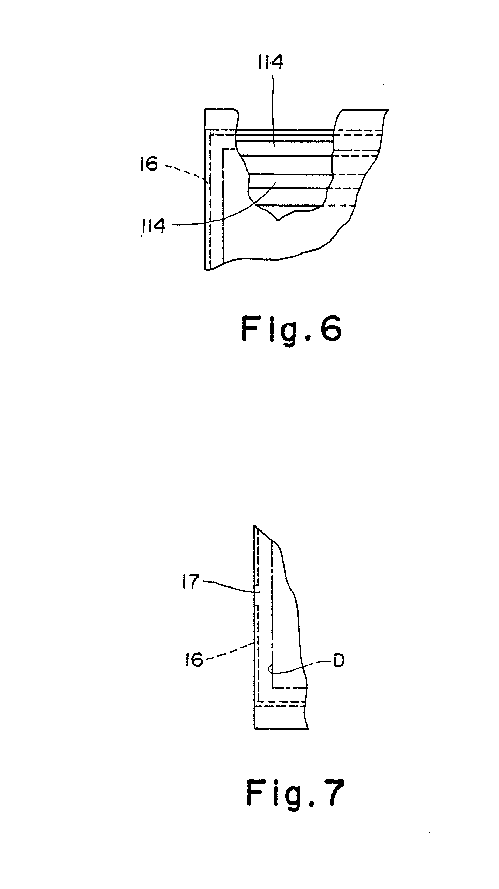

When the glass substrates 12 and 13 are superposed one upon the other, a substrate adhesive 14 in the form of a spot is previously printed onto the orientation membrane on at least one of the glass substrates 12 and 13, that is to say, onto the orientation membrane 13b on the rear glass substrate 13 in case of the illustrated embodiment, at a plurality of areas except for display areas where the transparent electrodes 12a and 13a on the respective glass substrates 12 and 13 face toward each other. The substrate adhesive may be in the form of an elongated strip 114 as illustrated in Fig. 6. The substrate adhesive 14 is heated while the glass substrates 12 and 13 are pressed against each other, to bond the glass substrates 12 and 13 to each other to secure the same to each other in a united fashion, with a predetermined gap maintained between the glass substrates 12 and 13. The substrate adhesive 14 is printed in such a size or dimension that even if the substrate adhesive 14 is spread flat when pressed and heated, it does not enter the display areas formed by the transparent electrodes. Further, in order to maintain the predetermined gap between the glass substrates 2 and 13, spacers 15 each comprising a glass fiber cut in short length are distributed over the surface of the orientation membrane 13b, and/or the spacers 15 are embedded in the substrate adhesive 14. It is appropriately selected depending upon the size of the liquid crystal cell, the size of the display pattern and the like whether only the former way is used, or only the latter way is used, or both the ways are used.

Subsequently, a sealing adhesive 16 is applied to the glass substrates 12 and 13 so as to extend between their respective one sides 12d and 13d and along the periphery of the predetermined gap between the glass substrates 12 and 13 superposed one upon the other and fixedly secured to each other in the above-described manner. A heat curing method, a ultraviolet curing method or the like is employed to bond the glass substrates 12 and 13 by the sealing adhesive 16, to define a sealed space between the glass substrates 12 and 13. At that time, the sealing adhesive 16 is applied to the glass substrates 12 and 13 except for a portion of the periphery of the predetermined gap to form a pouring opening 17 as illustrated in Fig. 7. A liquid crystal 18 is filled in the sealed space between the glass substrates 12 and 13 through the pouring opening 17 by, for example, a vacuum pouring method. Finally, the same sealing adhesive 16 is applied to the pouring opening 17 and is cured to close the same as illustrated in Fig. 4.

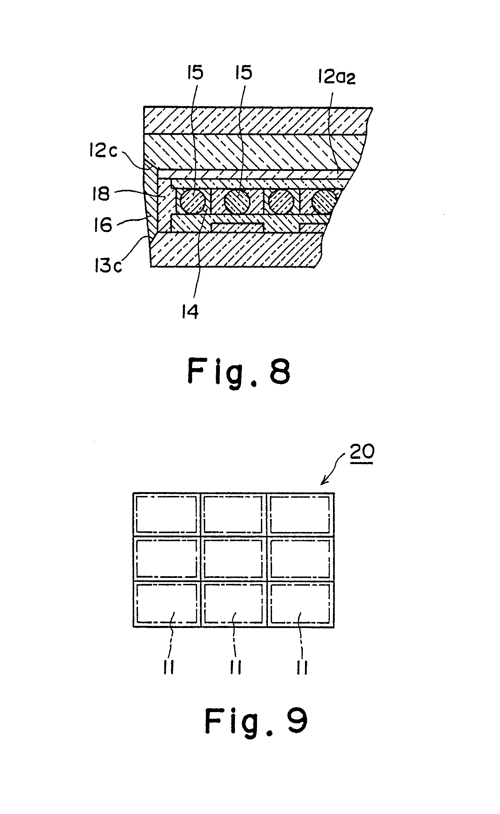

Preferably, side edges of the one side 13d of the rear glass substrate 13 except for the right side edge as viewed in Fig. 4 are chamfered at 13c by grinding as illustrated in Figs. 5 and 8, in order to realize the uniform application of the sealing adhesive 16. Still preferably, the left side edge of the one side 12d of the front glass substrate 12 as viewed in Fig. 4 may likewise be chamfered at 12c as illustrated in Fig. 8. Further, a polarizing plate 19 is adhered to the other side 12e of the glass substrate 12, as illustrated in Fig. 5, so that the liquid crystal cell 11 is completed.

The liquid crystal cell 11 of dot matrix type according to the embodiment of the invention is constructed as described above, and the operation of the cell 11 is substantially identical with that of the conventional liquid crystal cell of dot matrix type and will not therefore be described here. By virtue of provision of the substrate adhesive 14 which provides sufficient bonding strength between the glass substrates 12 and 13, the sealing adhesive 16 for sealing the liquid crystal 18 at the periphery of the predetermined gap between the glass substrates 12 and 13 can be narrowed in width. Thus, it is possible to extend an effective display area D to a position adjacent the peripheries of the respective glass substrates 12 and 13 and over substantially the entire surface of the front glass substrate 12, so that the effective display area D is made large. Accordingly, if a plurality of liquid crystal cells 11 are arranged in a plane to form a large display device 20 as illustrated in Fig. 9, portions of the display device 20, where no display is effected, are extremely reduced in area, so that there is provided the large display device 20 which is very easy to watch.

Although the embodiment of the invention has been described as being applied to the liquid crystal cell of dot matrix type, the invention should not be limited to this specific embodiment, but is applicable to liquid crystal cells having another display patterns. Moreover, although the substrates have been described as being formed of glass, they may be formed of any transparent resin materials.

As described above, according to the invention, the substrate adhesive is applied to the front and rear substrates so as to extend between their respective one sides and along the periphery of the predetermined gap between the front and rear substrates. This makes it possible to provide the bonding strength between the front and rear substrates, which is similar in degree to that of the conventional liquid crystal cell. Moreover, the sealing adhesive applied to the front and rear substrates along the periphery of the predetermined gap between the substrates can be reduced in width. Thus, it is made possible to effect the display up to the position adjacent the peripheries of the respective front and rear substrates and over substantially the entire surface of the front substrate, so that the effective display area can be increased. Accordingly, it is possible to reduce the areas of the respective front and rear substrates required for the effective display area, so that the manufacturing cost is reduced. Consequently, if a plurality of liquid crystal cells are arranged to form a large display device, portions of each liquid crystal cell where no display is effected are reduced in area, so that it is easy to watch the display on the large display device, and there is provided high display quality.

## Claims

1. A liquid crystal cell characterized by comprising:

a pair of front and rear transparent flat substrates (12, 13) arranged in facing and spaced relation to each other;

a plurality of transparent electrodes (12a) formed on one side (12d) of said front substrate (12), and a plurality of transparent electrodes (13a) formed on one side (13d) of said rear substrate (13) which faces toward said one side (12d) of said front substrate (12);

orientation membranes (12b, 13b) formed respectively on said transparent electrodes (12a, 13a) on the respective front and rear substrates (12, 13) so as to cover the respective transparent electrodes (12a, 13a), with a predetermined gap maintained between said one sides (12d, 13d) of the respective substrates (12, 13);

substrate adhesive means (14, 114) arranged between said orientation membranes (12b, 13b) on the respective front and rear substrates (12, 13) at a plurality of areas except for display areas where said transparent electrodes (12a, 13a) on the respective substrates (12, 13) face toward each other, for bonding said front and rear substrates (12, 13) to each other, with said predetermined gap maintained therebetween;

sealing adhesive means (16) extending between said one sides (12d, 13d) of the respective front and rear substrates (12, 13) and along a periphery of said predetermined gap to define a seales space between said front and rear substrates (12, 13), and

a liquid crystal (18) filled in said sealed space.

2. A liquid crystal cell as defined in claim 1, characterized in that at least one side edge (12c, 13c) of said one side (12d, 13d) of at least one of said front and rear substrates (12, 13) is chamfered, and said sealing adhesive is applied onto the at least one chamfered side edge (12c, 13c).

3. A liquid crystal cell as defined in claim 1 or 2, characterized in that a plurality of spacers (15) are embedded in said substrate adhesive means (14, 114).

4. A liquid crystal cell as defined in one of the claims 1 to 3, characterized in that a plurality of spacers (15) are arranged between said orientation membranes (12b, 13b) on the respective front and rear substrates (12, 13).

5. A liquid crystal cell as defined in one of the claims 1 to 4, characterized in that said substrate adhesive means (14) is applied in the form of a spot onto said plurality of areas.

6. A liquid crystal cell as defined in one of the claims 1 to 4, characterized in that said substrate adhesive means (114) is applied in the form of an elongated strip onto said plurality of areas.

7. A display device characterized by comprising a plurality of liquid crystal cells (11) arranged in a plane, each of said liquid crystal cell (11) comprising:

a pair of front and rear transparent flat substrates (12, 13) arranged in facing and spaced relation to each other;

a plurality of transparent electrodes (12a) formed on one side (12d) of said front substrate (12), and a plurality of transparent electrodes (13a) formed on one side (13d) of said rear substrate (13) which faces toward said one side (12d) of said front substrate (12);

orientation membranes (12b, 13d) formed respectively on said transparent electrodes (12a, 13a) on the respective front and rear substrates (12, 13) so as to cover the respective transparent electrodes (12a, 13a), with a predetermined gap maintained between said one sides (12d, 13d) of the respective substrates (12, 13);

substrate adhesive means (14, 114) arranged between said orientation membranes (12b, 13b) on the respective front and rear substrates (12, 13) at a plurality of areas except for display areas where said transparent electrodes (12a, 13a) on the respective substrates (12, 13) face toward each other, for bonding said front and rear substrates (12, 13) to each other, with said predetermined gap maintained therebetween;

sealing adhesive means (16) extending between said one sides (12d, 13d) of the respective front and rear substrates (12, 13) and along a periphery of said predetermined gap to define a sealed space between said front and rear substrates (12, 13); and

a liquid crystal (18) filled in said sealed space.

8. A method of manufacturing a liquid crystal cell (11), characterized by comprising the steps of:

preparing a pair of front and rear transparent flat substrates (12, 13), each of said substrates (12, 13) having a plurality of transparent electrodes (12a, 13a) formed on one side (12d, 13d) of the substrate (12, 13) and a transparent orientation membrane (12b, 13b) formed on the transparent electrodes (12a, 13a) so as to cover the same;

printing a substrate adhesive (14, 114) onto a plurality of areas on the orientation membrane (12b, 13b) on at least one of said pair of front and rear substrates (12, 13);

superposing said front and rear substrates (12, 13) one upon the other in such a manner that the orientation membranes (12b, 13b) on the respective substrates (12, 13) face toward each other in spaced relation, but are brought into contact with each other through the printed substrate adhesive (14, 114), said plurality of areas being those except for display areas where the electrodes (12a, 13a) on the respective front and rear substrates (12, 13) face toward each other;

heating said substrate adhesive (14, 114) to bond said front and rear substrates (12, 13) to each other, with a predetermined gap maintained therebetween;

applying a sealing adhesive (16) to said front and rear substrates (12, 13) so as to extend between the one sides (12d, 13d) of the respective substrates (12, 13) and along a periphery of said predetermined gap to define a sealed space between said front and rear substrates (12, 13); and

filling said sealed space with a liquid crystal (18).

9. A method as defined in claim 8 characterized by including the steps of:

applying said sealing adhesive (16) to said substrates (12, 13) except for a portion of the periphery of said predetermined gap to form a pouring opening (17);

pouring said liquid crystal (18) into said sealed space through said pouring opening (17); and

applying a sealing adhesive (16) to said pouring opening (17) to close the same.

10. A method as defined in claim 8 or 9, characterized by including the step of chamfering at least one side edge (12c, 13c) of said one side (12d, 13d) of at least one of said front and rear substrates (12, 13), said sealing adhesive (16) being applied onto said at least one chamfered side edge (12c, 13c).

11. A method as defined in one of the claims 8 to 10, characterized in that a plurality of spacers (15) are embedded in said sealing adhesive (14, 114).

12. A method as defined in one of claims 8 to 11, characterized in that a plurality of spacers (15) are arranged between said orientation membranes (12b, 13b) on the respective front and rear substrates (12, 13).

13. A method as defined in one of the claims 8 to 12, characterized in that said transparent electrodes (12a, 13a) are formed of indium tin oxide.

14. A method as defined in one of the claims 8 to 13, characterized in that said substrate adhesive (14) is applied in the form of a spot onto said plurality of areas.

15. A method as defined in one of the claims 8 to 13, characterized in that said substrate adhesive (114) is applied in the form of an elongated strip onto said plurality of areas.

Fig. 1

Fig. 2

Fig. 3

Fig. 4

Fig. 5

Fig.6

Fig.7

Fig. 8

Fig. 9